# EUROPEAN PATENT SPECIFICATION

(11) **EP 2 140 672 B1**
(45) Date of publication and mention of the grant of the patent: **06.03.2013**
(21) Application number: 08709542.8
(22) Date of filing: 27.02.2008
(51) Int. Cl.: H04M 3/533, H04L 29/06

(54) **SECURE VOICEMAIL SYSTEM AND METHOD**
SICHERES VOICEMAIL-SYSTEM UND -VERFAHREN
SYSTÈME ET PROCÉDÉ DE MESSAGERIE VOCALE SÉCURISÉE

(30) Priority: 27.02.2007 GB 0703798
(43) Date of publication of application: 06.01.2010
(73) Proprietor: Cellcrypt Limited, London W1D 5EU (GB)
(72) Inventor: POPPE, Tobias, London W1D 5EU (GB); ROSINI, Rodolfo, London W1D 5EU (GB)
(74) Representative: Exell, Jonathan Mark
(86) International application number: PCT/GB2008/000666
(87) International publication number: WO 2008/104775

(56) References cited:
- US-A- 5 136 648
- US-A- 5 710 816
- US-B1- 6 741 705

## Description

### Field of the Invention

The present invention relates to a system for providing a secure and encrypted voicemail repository.

### Background to the Invention

Voicemail facilities are often offered by corporate telephone systems and also mobile telephone systems to enable messages to be taken when a user is unavailable or on another line. Most telephone systems can now offer some form of voicemail. In each case, the voicemail service is typically hosted by a computer system linked to the telephone network being served such that it is able to receive calls to handsets set to forward calls to voicemail or that are unavailable and record messages in a repository.

In order to offer flexibility to users, current voicemail systems allow users to dial in to the voicemail repository to retrieve their messages. Users can assign a pin number to their mailbox to limit access and many systems have a default pin number if this is not assigned. Some systems will not prompt for a pin number if the caller uses the handset associated with the mailbox (as opposed to dialling in from a different number to retrieve their messages).

Increasingly, data security is becoming an issue to everyone. The telephone is still considered a more secure method of communication than e-mail for example. As such, confidential messages may be left by voicemail that would not necessarily have been communicated via e-mail.

However, it is slowly becoming apparent that security surrounding telecommunication systems is insufficient. Security in respect of e-mail systems and the like has increased over the last few years to the extent that strong authentication is often required to access an e-mail mailbox. However, current voicemail systems are very poorly defended and pin numbers can often be guessed or cracked by brute force approaches, allowing anybody access to a user's mailbox. Moreover a voicemail message could be intercepted during retrieval by eavesdropping on the communication.

US 6741705 discloses a system and method for securing voice mail messages. US 5710816 discloses a method and apparatus for ensuring receipt of voice mail messages.

### Statement of Invention

According to an aspect of the present invention there is provided a system according to claim 1.

When a voicemail message is requested, the message in its encrypted form is transmitted to the handset which is then able to use the private key associated with the key pair to decrypt the message and output it to the user.

The voicemail system need not be the default voicemail system assigned by the telecommunication provider. The recipient's handset could be configured to forward voicemail calls to an alternate voicemail provider.

The repository may be arranged to establish said secure communication channel with said calling system.

The repository may further comprise at least one encryption key associated with each of a plurality of mailboxes, each of the mailboxes being associated with a recipient system, the repository being arranged to identify the mailbox in dependence on the called recipient system and use said respective at least one key for establishment of said secure communication channel and/or communication with said calling system via said secure communication channel.

The repository may further comprise at least one encryption key associated with each of a plurality of mailboxes, each of the mailboxes being associated with a recipient system, the repository being arranged to identify the mailbox called in dependence on the called recipient system and to encrypt non-encrypted calls into said encrypted form during or prior to recording using said at least one encryption key.

The at least one key may comprise a public key of a public-private key pair.

The system may further comprise a recipient system, wherein the recipient system includes the private key of the public-private key pair and is arranged to obtain said encrypted form of the call from the repository and decrypt the call in dependence on the private key.

The repository may be arranged, upon completion of recordal of a call, to transmit said encrypted form of said call to the respective recipient system.

The repository may be arranged to transmit said encrypted form of said call to the respective recipient system during recordal.

The repository may be remote of any telecommunication provider's network management system and is arranged to receive calls on behalf of recipient systems that operate on different telecommunication networks.

The system may further comprise a plurality of repositories each arranged to receive calls for a recipient system and to transmit said recorded calls in said encrypted form between themselves upon demand.

According to another aspect of the present invention, there is provided a method according to claim 11.

The method may further comprise:
storing at least one encryption key associated with each of a plurality of mailboxes,
each of the mailboxes being associated with a recipient system;
identifying the mailbox in dependence on the called recipient system; and,
using said respective at least one key for establishment of said secure communication channel and/or communication with said calling system via said secure communication channel.

The method may further comprise:
storing at least one encryption key associated with each of a plurality of mailboxes,
each of the mailboxes being associated with a recipient system;
identifying the mailbox called in dependence on the called recipient system; and, encrypting non-encrypted calls into said encrypted form during or prior to recording using said at least one encryption key.

The method may further comprise, upon completion of recordal of a call, transmitting said encrypted form of said call to the recipient system.

The method may further comprise transmitting said encrypted form of said call to the respective recipient system during recordal.

### Brief Description of the Drawings

Examples of the present invention will now be described with reference to the accompanying drawings, in which:
Figure 1 is a schematic diagram of a secure voicemail system according to a first aspect of the present invention;
Figure 2 is the schematic diagram of Figure 1 illustrating a preferred manner of operation;
Figure 3 is a schematic diagram of a secure voicemail system according to another aspect of the present invention; and
Figure 4 is an illustration of a screen display according to another aspect of the present invention.

### Detailed Description

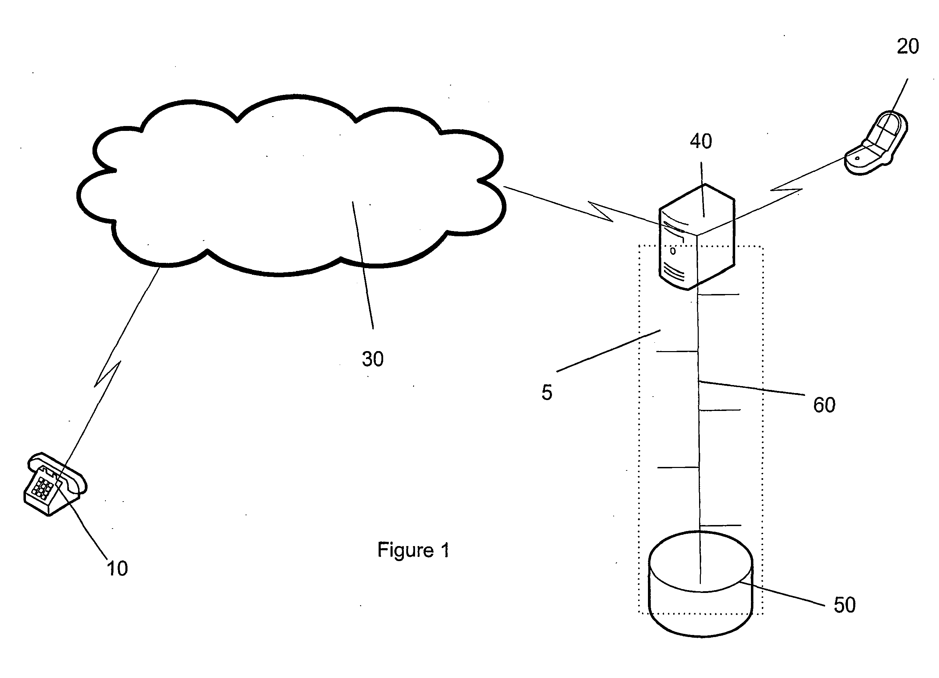

Figure 1 is a schematic diagram of a secure voicemail system according to an embodiment of the present invention.

The secure voicemail system 5 forms part of a mobile telephone network. The mobile telephone network includes a switching station 40 which is connected to a public switched telephone network (PSTN) 30. A repository 50 is connected via a network 60 to the switching station 40 for storing voicemail messages.

When a first user wishes to communicate with a second user, the first user uses his or her handset 10 calls the telephone number associated with the handset 20 of the second user. This call is routed via the PSTN 30 to the switching centre 40. The switching centre 40 determines whether the handset 20 of the second user is in range and available.

If the handset 20 of the second user is not in range or available (for example if the user was on another call or the handset was set to forward all calls to voicemail), the switching centre 40 initiates a voicemail message capture process that instructs the user at handset 10 to record a voicemail message.

The recorded voicemail message is stored in the repository 50. The recorded message is stored in an encrypted form, encryption being performed using a public key from a public-private key pair associated with the second user's handset 20.

When the second user wishes to access his or her voicemail, he or she uses the handset 20 to connect to the voicemail system 5. Upon receiving the request, the voicemail system 5 accesses the messages in the repository 50 and uploads them to the handset 20. Software on the handset uses the private key from the public-private key pair to decrypt the message so that it can be output to the user via the device 20.

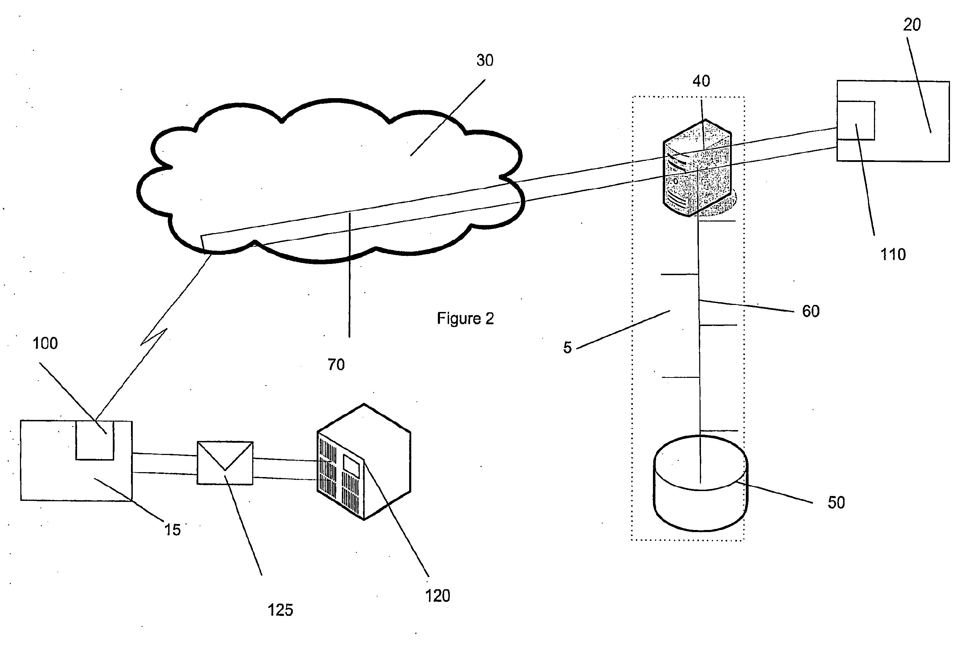

Figure 2 is the schematic diagram of Figure 1 illustrating preferred operation of the secure voicemail system.

In this embodiment, the first user's device 15 includes a secure communication system 100.

When the switching system 40 connects to the first user's handset 15, it initiates a query to determine whether a secure communication system exists. In this case, as such a system 120 does exist, the first handset 15 provides a confirmatory response and a secure communication channel 70 is negotiated between the first user's device 15 and the second device 20. In this manner, communications over the PSTN 30 (or other network as embodiments of the present invention need not operate over a PSTN) are encrypted and also secure.

In use, when a communication session is being established, the communication system 100 checks to see if the second user's device 20 supports secure communications. In this scenario, the called device 20 includes a compatible secure communication system 110. During call setup negotiation, the respective secure communications systems 100, 110 establish a data connection 70 (preferably using an Internet Protocol (IP) based connection), perform key exchange and subsequently intercept voice communications and digitise, packetise and encrypt them before transmitting them over a data connection. Upon receipt, the second user's device 20 performs the steps in reverse and outputs the voice to the remote user.

Optionally, a direct GSM data connection may be used instead of IP. An HSCSD GSM data connection is used to reduce latency.

The ITU-T G.722.2 codec is preferably used for voice processing.

The communications systems 100, 110 may use redundant encryption systems for session, authentication and/or key exchange. Preferred embodiments use two strong algorithms at the same time in series. The combination preserves security of communication in the event that one algorithm is found to be weak in the future.

For session encryption: AES and RC4 with 256 bit may be used. For authentication: RSA and DSA with 4096 bit may be used. For key exchange: Diffie-Hellman with 4096 bit may be used.

Preferably, session keys are deleted from both the initiating and recipient mobile telephones once the communication has been completed. In this way, past communications cannot be decrypted even if the private key material from the mobile phones is extracted. Session keys are only stored on the mobile phone, only in memory and only for the duration of the secure communication.

Random numbers used for key generation are taken from a secure source if available. As most mobile telephones do not offer such a source, a remote source may be used such as an SMS server 120 for providing a random number seed by SMS 125. In this way, for each communication session the first seed for a local pseudo random number generator requested through SMS.

Preferably the communication system is simply installable on a mobile telephone from a remote source. Preferably, installation does not require key management. A 'first-trust' key management similar to that in SSH may be used. Making and receiving a phone call will preferably be no different to a traditional phone call in respect of voice quality and latency.

The identity of a user is bound to the EMSI, IMSI and/or phone number.

Each GSM packet is preferably encrypted separately. Any GSM packet that does not arrive in time or is lost during transmission is ignored. It is believed that lost GSM packets do not pose a security or quality problem.

In the case where the second user's device 20 is available to establish the secure communication channel 70 but not available to actually take the call (for example the recipient may be on another call or the device may be set to go straight to voicemail), key exchange and establishment of the secure communication channel 70 happens as above. However, once the channel is established, the second user's device 20 triggers the switching system 40 to divert the call to voicemail.

The switching system 40 routes the call to the repository 50 where the user's standard or pre-recorded greeting is played to the first user's device 15. The voicemail message is then received from the first user's device 15 in the packetized, encrypted form. The data is stored at the repository 50 as received. Preferably, the repository captures data on the first user's device and meta data on the call (e.g. identifier/phone number of the first user's device, time of message) and stores this data linked to the stored packets of voicemail data.

The repository preferably does not hold the key(s) necessary to decrypt the data received over the secure communications channel and therefore has no choice other than to record it in the secure form as received. Therefore, even if the repository is compromised, the data itself is still secure.

In a preferred embodiment, public/private key encryption is used and the repository holds copies of the second device's public key(s). In this manner, if the second device is not available (for example it was turned off) to establish the secure communication channel 70, the repository can act as a proxy to the second device and establish the secure communications channel 70 for subsequent use in re4ceiving a voicemail message. Indeed, the repository 50 may act as a proxy even if the second device 20 is available as it may be considered more efficient for the second device to immediately pass voicemail destined connection requests to the repository to be dealt with instead of having to manage the overhead of key exchange etc. Even when the second device 20 does take part in establishing the secure communications channel 70, it is still preferred that the repository holds copies of the device's public key(s) so that it can encrypt the outgoing voicemail greeting and communicate any options securely to the first device 15.

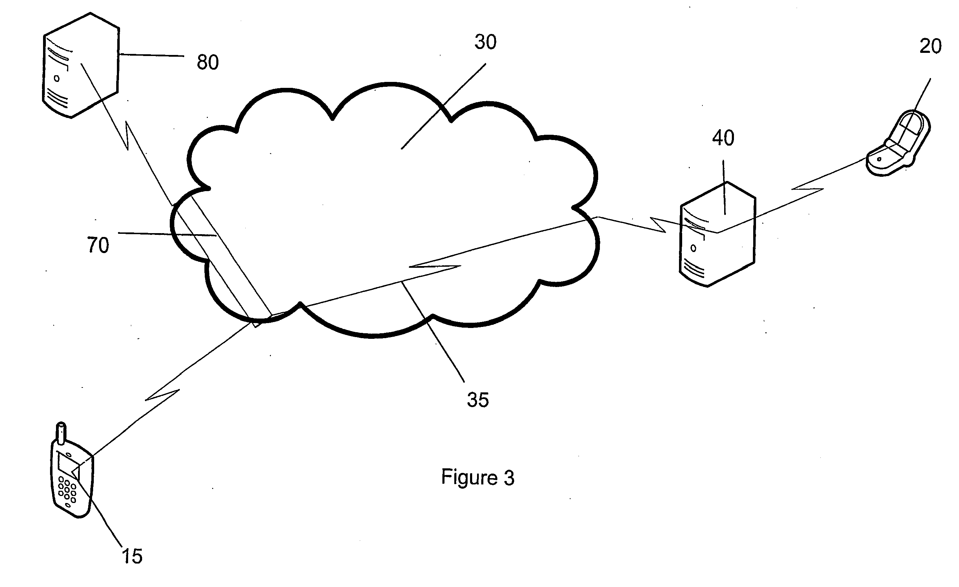

Figure 3 is a schematic diagram of a secure voicemail system according to another embodiment of the present invention.

In this embodiment, the second user's handset 20 is configured to forward voicemails to an alternate voicemail system 80 that is not linked or associated with the communication provider's switching centre 40.

The alternate voicemail system 80 is sited remotely from the switching centre 40. When the switching centre 40 attempts to forward the first caller to voicemail, the alternate forwarding address is identified and the first handset 15 is connected (via a secure channel 70 should the handset 15 be capable) to the alternate voicemail system 80. The secure channel 70 can be established as discussed above (i.e. either by the second device 20 and then redirected or, preferably, direct with the alternate voicemail system 80 using copies of the second device's public encryption keys.

Preferably, if the alternate voicemail system 80 is remote from the network or systems of the telecommunications operator that serves the second handset 20, a secure communication channel is established between the second handset 20 and the alternate voicemail system 80 whenever voicemail is transmitted to the handset 20. In this manner, not only is the voicemail itself is encrypted, so to is the communication traffic providing redundancy and additional security.

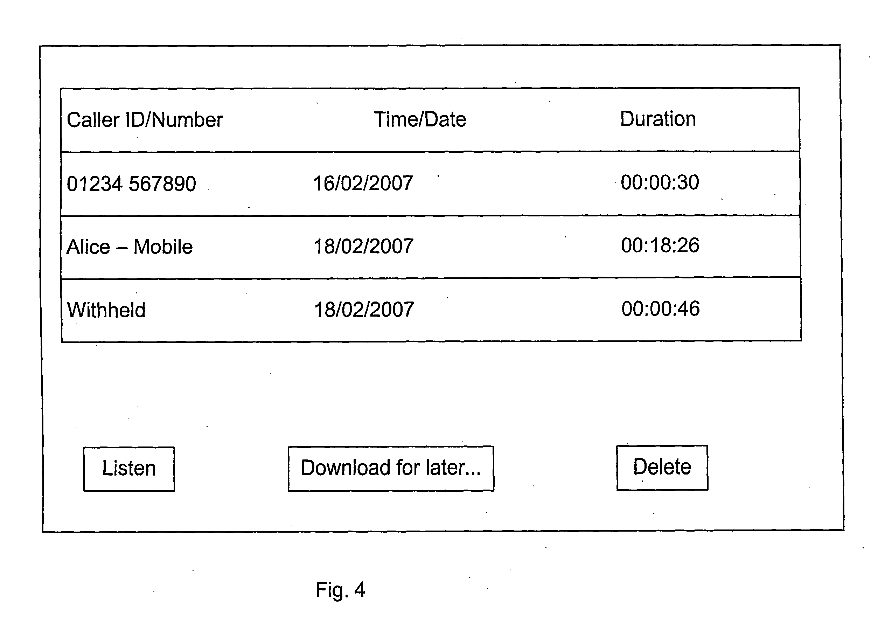

Figure 4 is an illustration of a screen display according to a further embodiment of the present invention.

In this embodiment, an interface 100 is provided to the user of the handset 20 associated with the mailbox on the secure voicemail system (50 or 80). As voicemails are received and stored in the repository 50, 80, a notification is pushed out to the handset 20 and displayed on the user interface 100. Preferably, the telephone number of the caller, time and date and duration of the message are displayed. The interface preferably allows the user to select messages to be downloaded, played, stored or deleted. It will be appreciated that whilst the secure voicemail system of the present invention could work in the same manner as conventional voicemail systems which are accessed and voicemails are output sequentially, by pushing a notification to the user device, random access can be provided to voicemails which should improve the user experience substantially. Additionally, voicemails can be downloaded to the handset 20 to allow the user to listen to them at his or her leisure and the caller and length of voicemail can give the user at the handset 20 an indication of how long it will take to obtain the messages. Optionally, the encrypted messages themselves can be pushed to the handset 20 rather than a notification. In this manner, no wait would be experienced by the user during the downloading process but it would require the handset 20 to have an increased storage capacity.

As the voicemail messages are encrypted, they could be transported around the Internet as there is a reduced concern in terms of security. One possibility for movement of voicemail messages would be if the user of the second handset 20 was roaming between networks. A voicemail message could be transmitted to a local store on the last known network used by the handset 20 rather than requiring it always to be sent via the user's home network.

In one embodiment, voicemail repositories may be implemented in some form or hierarchy or peer-to-peer topology and arranged to distribute public keys amongst themselves to provide redundancy, provide roaming and also to enable selection of a closest repository to the caller to reduce network overhead. In such arrangements, a repository may be identified as a home repository for a user device and voicemails received on other repositories may be transferred to, or synchronised with, the home repository. A non-home repository receiving a voicemail may indicate its availability to the home repository and transmit it to the home repository if not requested by the device or home repository within a predetermined amount of time.

Whilst public/private key pairings are discussed as a preferred implementation for encryption, it will be appreciated that other encryption systems exist which would be equally applicable. For example, the public-private key pairings could be used to negotiate a symmetric session key used only for that message. Preferably, the public/private key pair is generated at the user's handset 20. It may optionally be linked to a specific parameter of the handset such as the IMEI unique identifier. The public key could be shared among telecommunication providers and those providing the secure encrypted voicemail service without fear of breaching security of the secure voicemail system. Preferably, compatible handsets can download a software application to enable use of an encrypted voicemail system. When the application is first run, the public and private key pairings are created and the public key is then transmitted to the secure voicemail system for use in creating the secure encrypted voicemails.

## Claims

1. A system including a secure voicemail repository (50) and a recipient system (20), the repository being arranged to receive calls for the recipient system and record said calls in an encrypted form, wherein the encrypted form is decryptable by a key associated with a hand set of the recipient system, **characterised in that** the system is arranged, on demand, to provide the encrypted form of the call to the recipient system,
wherein the repository is arranged to receive calls in the encrypted form via a secure communication channel and to record said calls in said encrypted form, the secure communication channel being established between a calling system and the recipient system, the recipient system being remote of the repository, the repository being arranged to receive transference of the secure communication channel from the recipient system for receiving said voicemail.

2. A system as claimed in claim 1, wherein the repository is arranged to establish said secure communication channel with said calling system when said recipient system is unavailable.

3. A system as claimed in claim 1 or 2, wherein the repository further comprises at least one encryption key associated with each of a plurality of mailboxes, each of the mailboxes being associated with a recipient system, the repository being arranged to identify the mailbox in dependence on the called recipient system and use said respective at least one key for establishment of said secure communication channel and/or communication with said calling system via said secure communication channel.

4. A system as claimed in claim 1, wherein the repository further comprises at least one encryption key associated with each of a plurality of mailboxes, each of the mailboxes being associated with a recipient system, the repository being arranged to identify the mailbox called in dependence on the called recipient system and to encrypt non-encrypted calls into said encrypted form during or prior to recording using said at least one encryption key.

5. A system as claimed in claim 3 or 4, wherein the at least one key comprises a public key of a public-private key pair.

6. A system as claimed in claim 5, further comprising a recipient system, wherein the recipient system includes the private key of the public-private key pair and is arranged to obtain said encrypted form of the call from the repository and decrypt the call in dependence on the private key.

7. A system as claimed in claim 6, wherein the repository is arranged, upon completion of recordal of a call, to transmit said encrypted form of said call to the respective recipient system.

8. A system as claimed in claim 6, wherein the repository is arranged to transmit said encrypted form of said call to the respective recipient system during recordal.

9. A system as claimed in any preceding claim, wherein the repository is remote of any telecommunication provider's network management system and is arranged to receive calls on behalf of recipient systems that operate on different telecommunication networks.

10. A system as claimed in any preceding claim, further comprising a plurality of repositories each arranged to receive calls for a recipient system and to transmit said recorded calls in said encrypted form between themselves upon demand.

11. A method of operating a secure voicemail repository **characterised by**:
establishing a secure communication channel for a call between a calling system (10) and a recipient system (20),
transferring the secure communication channel from the recipient system to a repository (50) remote of the recipient system for receiving voicemail call;
receiving said voicemail call in a packetized encrypted form at the repository;
recording said calls in a said packetized encrypted form in the repository; and, providing, on demand, the encrypted form of the call to the recipient system, wherein
the encrypted form is decryptable by a key associated with a handset of the recipient system.

## Patentansprüche

1. System, das einen sicheren Sprachnachrichten-Speicher (50) und ein Empfänger-System (20) aufweist, wobei der Speicher dazu eingerichtet ist, Anrufe für das Empfänger-System anzunehmen und die Anrufe in verschlüsselter Form aufzuzeichnen, wobei die verschlüsselte form mittels eines mit einem Handgerät des Empfänger-Systems in Bezug stehenden Schlüssels entschlüsselbar ist,
**dadurch gekennzeichnet, dass** das System dazu eingerichtet ist, auf Anforderung die verschlüsselte Form des Anrufs dem Empfängersystem zur Verfügung zu stellen,
wobei der Speicher dazu eingerichtet ist, Anrufe in der verschlüsselten Form über einen sicheren Kommunikationskanal zu empfangen und die Anrufe in der verschlüsselten Form aufzuzeichnen, wobei der sichere Kommunikationskanal zwischen einem anrufenden System und dem Empfänger-System aufgebaut wird, das Empfänger-System vom Speicher entfernt ist, und der Speicher dazu eingerichtet ist, eine Übertragung des sicheren Kommunikationskanals vom Empfänger-System zum Empfangen der Sprachnachrichten zu empfangen.

2. System gemäß Anspruch 1, wobei der Speicher dazu eingerichtet ist, den sicheren Kommunikationskanal mit dem anrufenden System aufzubauen, wenn das Empfänger-System nicht verfügbar ist.

3. System gemäß Anspruch 1 oder 2, wobei der Speicher ferner in Bezug stehend mit jeder von mehreren Mailboxen zumindest einen Schlüssel für die Verschlüsselung aufweist, wobei jede der Mailboxen mit einem Empfänger-System in Bezug steht, wobei der Speicher dazu eingerichtet ist, die Mailbox in Abhängigkeit von dem angerufenen Empfänger-System zu identifizieren, und den entsprechenden mindestens einen Schlüssel zum Aufbau des sicheren Kommunikationskanals und/oder der Kommunikation mit dem anrufenden System über den sicheren Kommunikationskanal zu verwenden.

4. System gemäß Anspruch 1, wobei der Speicher ferner in Bezug stehend mit jeder von mehreren Mailboxen zumindest einen Schlüssel für die Verschlüsselung aufweist, wobei jede der Mailboxen mit einem Empfänger-System in Bezug steht, wobei der Speicher dazu eingerichtet ist, die Mailbox in Abhängigkeit von dem angerufenen Empfänger-System zu identifizieren, und nicht verschlüsselte Anrufe während oder vor dem Aufzeichnen unter Verwendung des mindestens einen Schlüssel für die Verschlüsselung in die verschlüsselte Form zu verschlüsseln.

5. System gemäß Anspruch 3 oder 4, wobei der mindestens eine Schlüssel einen öffentlichen Schlüssel eines Paares öffentlicher und vertraulicher Schlüssel aufweist.

6. System gemäß Anspruch 5, welches ferner ein Empfänger-System aufweist, wobei das Empfänger-System den vertraulichen Schlüssel des Paares öffentlicher und vertraulicher Schlüssel aufweist und dazu eingerichtet ist, die verschlüsselte Form vom Speicher zu erhalten und den Anruf in Abhängigkeit von dem vertraulichen Schlüssel zu entschlüsseln.

7. System gemäß Anspruch 6, wobei der Speicher dazu eingerichtet ist, auf die Vollendung der Aufzeichnung hin, die verschlüsselte Form des Anrufs an das entsprechende Empfänger-System zu übertragen.

8. System gemäß Anspruch 6, wobei der Speicher dazu eingerichtet ist, die verschlüsselte Form des Anrufs während des Aufzeichnens an das entsprechende Empfänger-System zu übertragen.

9. System gemäß einem der vorangehenden Ansprüche, wobei der Speicher entfernt von jeglichem Netzwerk-Verwaltungssystem eines Telekommunikation-Anbieters ist und dazu eingerichtet ist, Anrufe für Empfänger-Systeme zu empfangen, die in verschiedenen Telekommunikationsnetzwerken betrieben werden.

10. System gemäß einem der vorangehenden Ansprüche, welches ferner mehrere Speicher aufweist, die jeweils dazu eingerichtet sind, Anrufe für ein Empfänger-System zu empfangen und die aufgezeichneten Anrufe auf Anforderung in der verschlüsselten Form zwischen einander zu übertragen.

11. Verfahren zum Betrieben eines sicheren Sprachnachrichten-Speichers, **gekennzeichnet, durch**:
Aufbauen eines sicheren Kommunikationskanals für einen Anruf zwischen einem anrufenden System (10) und einem Empfänger-System (20),
Übertragen des sicheren Kommunikationskanals vom Empfänger-System zu einem Speicher (50), der entfernt vom Empfänger-System ist, zum Empfangen des Sprachnachrichten-Anrufs, Empfangen des Sprachnachrichten-Anrufs in einer paketierten verschlüsselten Form beim Speicher,
Aufzeichnen der Anrufe in der paketierten verschlüsselten Form im Speicher, und
Bereitstellen, auf Anforderung, der verschlüsselten Form des Anrufs für das Empfänger-System, wobei die verschlüsselte Form mittels eines mit einem Handgerät des Empfängersystems in Bezug stehenden Schlüssels entschlüsselbar ist.

## Revendications

1. Un système incluant un référentiel sécurisé de messagerie vocale (50) et un système de réception (20), le référentiel étant conçu pour recevoir des appels destinés au système de réception et pour enregistrer ces appels dans une forme encryptée, dans lequel la forme encryptée est décryptable par l'intermédiaire d'une clé associée avec un combiné du système de réception, **caractérisé en ce que** le système est conçu pour, sur demande, fournir la forme encryptée de l'appel au système de réception,
dans lequel le référentiel est conçu pour recevoir des appels dans leur forme encryptée via un canal de communication sécurisé et pour enregistrer ces appels dans leur forme encryptée, le canal de communication sécurisé étant établi entre un système d'appel et le système de réception, le système de réception étant distant du référentiel, le référentiel étant conçu pour recevoir une transmission par le canal de communication sécurisé depuis le système de réception afin de recevoir les messages vocaux.

2. Un système tel que revendiqué dans la revendication 1, dans lequel le référentiel est conçu pour établir le canal de communication sécurisé avec le système d'appel lorsque le système de réception est indisponible.

3. Un système tel que revendiqué dans les revendications 1 ou 2, dans lequel le référentiel comprend en outre au moins une clé d'encryptage associée avec chacune d'une pluralité de messageries, chacune de ces messageries étant associée avec un système de réception, le référentiel étant conçu pour identifier la messagerie en fonction du système de réception appelé et pour utiliser la au moins une clé d'encryptage correspondante pour l'établissement du canal de communication sécurisé et/ou de la communication avec le système d'appel via le canal de communication sécurisé.

4. Un système tel que revendiqué dans la revendication 1, dans lequel le référentiel comprend en outre au moins une clé d'encryptage associée avec chacune d'une pluralité de messageries, chacune de ces messageries étant associée avec un système de réception, le référentiel étant conçu pour identifier la messagerie en fonction du système de réception appelé et pour encrypter les appels non encryptés dans leur forme encryptée pendant ou avant l'enregistrement en utilisant cette au moins une clé d'encryptage.

5. Un système tel que revendiqué dans les revendications 3 ou 4, dans lequel la au moins une clé comprend une clé publique d'une paire de clés publique-privée.

6. Un système tel que revendiqué dans la revendication 5, comprenant en outre un système de réception, dans lequel le système de réception inclut la clé privée de la paire de clés publique-privée et est conçu pour obtenir la forme encryptée de l'appel depuis le référentiel et pour décrypter l'appel en fonction de cette clé privée.

7. Un système tel que revendiqué dans la revendication 6, dans lequel le référentiel est conçu pour, après l'enregistrement complet d'un appel, transmettre la forme encryptée de l'appel au système de réception correspondant.

8. Un système tel que revendiqué dans la revendication 6, dans lequel dans lequel le référentiel est conçu pour transmettre la forme encryptée de l'appel au système de réception correspondant pendant l'enregistrement.

9. Un système tel que revendiqué dans l'une des revendications précédentes, dans lequel le référentiel est distant de tout système de gestion de réseau d'un opérateur de télécommunication et est conçu pour recevoir des appels de la part de systèmes de réception qui travaillent sur différents réseaux de télécommunication.

10. Un système tel que revendiqué dans l'une des revendications précédentes, comprenant en outre une pluralité de référentiels chacun conçu pour recevoir des appels pour un système de réception et pour transmettre les appels enregistrés dans leur forme encryptée entre eux-mêmes sur demande.

11. Un procédé de fonctionnement d'un référentiel sécurisé de messagerie vocale **caractérisé par** :
l'établissement d'un canal de communication sécurisé pour un appel entre un système d'appel (10) et un système de réception (20) ;
le transfert du canal de communication sécurisé depuis le système de réception vers un référentiel (50) distant du système de réception pour recevoir un appel de messagerie ;
la réception de l'appel de messagerie dans une forme encryptée et en paquets par le référentiel ;
l'enregistrement de ces appels dans leur forme encryptée et en paquets dans le référentiel ; et
la transmission, sur demande, de la forme encryptée de l'appel au système de réception, où la forme encryptée est décryptable à l'aide d'une clé associée avec un combiné du système de réception.
